# EUROPEAN PATENT SPECIFICATION

(11) **EP 2 279 660 B1**
(45) Date of publication and mention of the grant of the patent: **25.07.2012**
(21) Application number: 09447033.3
(22) Date of filing: 01.08.2009
(51) Int. Cl.: A01K 35/00

(54) **Improved bird ring**
Verbesserter Vogelring
Bague d'oiseau améliorée

(43) Date of publication of application: 02.02.2011
(73) Proprietor: Smisdom Plastics N.V., 3800 Sint-Truiden (BE)
(72) Inventor: Smisdom, Geert, 3800 Sint-Truiden (BE)
(74) Representative: Van hunsel, Lieven M.S.

(56) References cited:
- CH-A- 338 640
- DE-U1- 8 815 019
- FR-A- 2 918 841
- US-A- 2 337 729
- US-A- 2 554 949

## Description

The present invention concerns an improved bird ring.

Bird rings are already known, for example pigeon rings, which consist of a plastic element, for example in the shape of an open ring which is provided round the leg of a pigeon or another bird for reasons of identification.

Applying identification data on the above-mentioned ringshaped element, for example in the form of a combination of letters and figures, is usually done by printing said element or by engraving it with a laser device.

In order to apply the known bird rings around a bird's leg, said element is usually provided with its free ends first round the bird's leg, and these far ends are then connected to one another by means of a lock provided to that end.

In order to simplify the application of the bird ring round the leg, the above-mentioned elements are often preformed in such a way that even when the bird ring is not closed, the two free ends of the element are already situated practically opposite one another.

Up to now, such rings are closed by means of a fastening system formed of a groove extending over the full width of one far end of the element and a rib extending over the full width of the other far end of the element, and whereby the above-mentioned rib can be either pushed in the above-mentioned groove by first aligning the free ends and subsequently pushing the rib in the groove, or it can be snapped in the groove by placing the free ends opposite one another and by pressing the rib in the groove.

In practice, it was found that such known bird rings are not suitable to be used with birds having a large bite force such as pheasants, parakeets, parrots and the like, since such birds succeed in opening the above-mentioned lock by pushing the rib out of the groove in the longitudinal direction of the ring, as a result of which the bird ring comes off and it becomes practically impossible to identify the bird.

Also when the above-mentioned lock is made as a snap connection, it turns out that birds often succeed in undoing the connection.

Bird rings which are applied round a bird's leg by means of form tension are already known, for example as said bird ring consists of two parts which are hinge-mounted in relation to one another, whereby while the bird ring is being closed, these parts tilt over what is called a 'dead point', after which they snap towards one another due to the form tension and thus stay fixed round the bird's leg.

With such bird rings, the far ends of the two hinge-mounted parts which end up opposite one another during the fastening are not provided with a lock, so that in this case as well birds with a large bite force may succeed in opening these bird rings.

Moreover, manufacturing such bird rings which close under the influence of a form tension entails some complications, which makes the production relatively difficult and expensive.

Another known type of bird ring which makes use of form tension consists of a spiral spring which is turned round the bird's leg, but applying such spiral-shaped elements round the bird's leg is usually time-consuming.

Moreover, birds like pheasants or parrots can at least partly remove such spirals from their legs again, as a result of which the identification data may get lost or, in case of a partial removal, the risk of injuries caused by the loose part of the screw-shaped element is real.

The present invention aims to remedy one or several of the above-mentioned and/or other disadvantages.

To this end, the invention concerns an improved bird ring which consists of an element which can be provided with two free ends round the bird's leg and which is provided with a lock on the above-mentioned far ends, whereby, according to the specific characteristic of the invention, the above-mentioned lock is provided with locking agents which, when the bird ring is closed, prevent the far ends of the element from mutually shifting in the longitudinal direction of the bird ring.

By longitudinal direction of the bird ring is meant in this case the direction parallel to the centre line of the bird ring when it is closed, which direction also corresponds with the direction of the leg around which said bird ring is applied when in use.

The presence of locking agents which prevent the mutual shifting of the far ends of the element in relation to one another prevents birds with a large bite force from succeeding in opening the lock, whereas the bird ring has a design that is easy and thus cheap to produce, which moreover is easy to apply and thus practically excludes the risk of injuries to the bird.

According to a preferred characteristic of the invention, the above-mentioned lock is provided with a lip on one far end of the element and with an opening in the other far end of the element, whereby the above-mentioned lip fits in the opening and whereby the above-mentioned locking agents are formed of at least one side wall of the above-mentioned opening.

The advantage of such a specific design is that it can be produced in a very simple and cheap manner, and that it nevertheless offers a good protection against any loosening by the bird.

According to a special aspect of the invention, the above-mentioned element is provided with two parts that are hinge-mounted in relation to one another, whereby the above-mentioned parts are preferably practically bracket-shaped.

By opening the two hinge-mounted parts in relation to one another, it becomes possible for the user to apply the bird ring in a very simple manner round the bird's leg, and to subsequently close the lock without having to overcome a form tension.

In order to better explain the characteristics of the present invention, the following preferred embodiments of an improved bird ring according to the invention are described with reference to the accompanying drawings, in which:

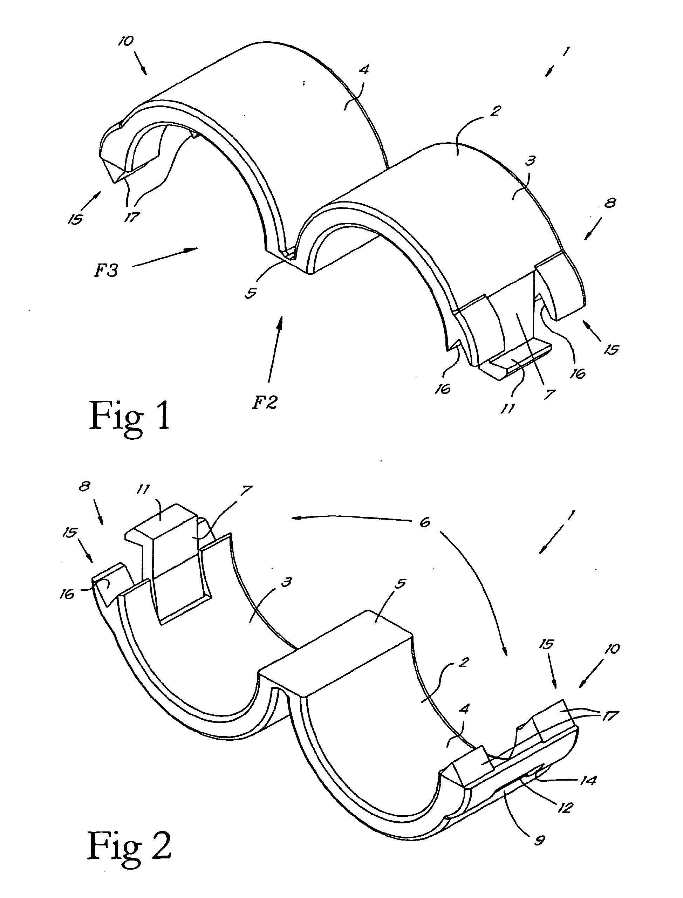

figure 1 schematically shows an improved bird ring according to the invention seen in perspective;

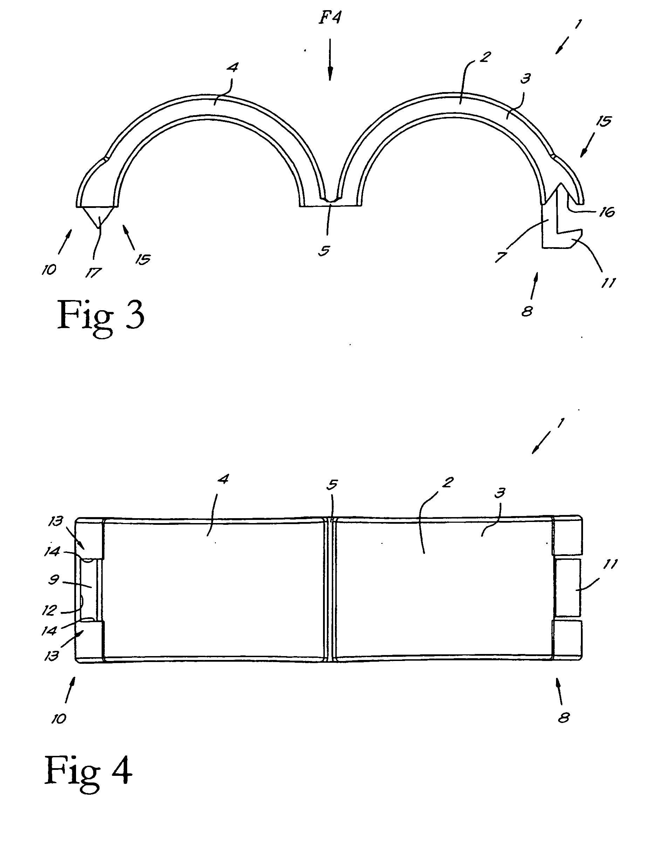

figures 2 and 3 show views according to arrows F2 and F3 respectively in figure 1;
figure 4 shows a view according to arrow F4 in figure 3.

The figures show an improved bird ring 1 according to the invention which is provided with an element 2 which is preferably but not necessarily made of plastic and which is in this case provided with two hinge-mounted parts 3 and 4.

Each of the above-mentioned parts 3 and 4 is in this case practically bracket-shaped.

The hinge 5 with which the above-mentioned parts 3 and 4 are connected to one another is in this case made in the shape of a film hinge which is made in one part with said parts 3 and 4.

The free ends of the above-mentioned parts 3 and 4 are provided with a lock 6 which in the given example is made in the shape of a snap-in system comprising a lip 7 on one far end 8 of the element 2 and an opening 9 in the other far end 10 thereof, whereby the dimensions of the lip 7 and the opening 9 are such that the lip 7 fits in this opening 9 and whereby the opening 9, when the bird ring 1 is closed, forms a guide for the lip 7.

On its free far end, the lip 7 is provided with a hook-shaped part 11 which, while the bird ring 1 is being closed, can catch behind an edge 12 in the above-mentioned opening 9.

The hook-shaped part 11 extends at an angle in relation to the lip 7, which angle is preferably situated within a range of 30° to 95°, more preferably within a range of 70° to 90°, and which, according to the most preferred embodiment, amounts to less than 90° and in particular amounts to 80°.

According to the invention, the lock 6 is provided with locking agents 13 which, when the bird ring 1 is closed, prevent any mutual shifting of the far ends 8 and 10 of the element 2 in relation to one another according to the longitudinal direction of the bird ring 1, whereby these locking agents 13 are in this case formed among others of the predominantly connecting position of the lip 7 to the side walls 14 of the above-mentioned opening 9.

According to a special characteristic, the bird ring 1 is in this case also provided with radial fixing means 15 which, when the bird ring 1 is closed, prevent any radial shifting of the far ends 8 and 10 of the element 2 in relation to one another.

In the given example, the above-mentioned radial fixing means 15 comprise a V-shaped recess 16 on one far end 8 of the element 2, in particular on either side next to the above-mentioned lip 7, and a pointed edge 17 on the other far end 10 of the element 2, in this case on either side of the above-mentioned opening 9.

The dimensions of the above-mentioned pointed edge 17 are such that, when the bird ring 1 is closed, this edge 17 will fit partly, and in this case entirely, in the V-shaped recess 16.

It is clear that the radial fixing means 15 can also be arranged inversely and that the pointed edge 17 can be provided on the far end 8, whereas the V-shaped recess 16 is provided on the far end 10.

Also the shape of the above-mentioned recess 16 and the edge 17 may differ from the shape given as an example.

Neither is it required according to the invention for the recess 16 to extend on either side of the lip 7 to prevent any radial shifting of the far ends 8 and 10 of the element 2 in relation to one another.

Indeed, it is sufficient if it is situated on one side thereof.

In that case, one only has to provide an edge 17 on the corresponding side next to the opening 9 and not on either side of the opening 9.

However, an advantage of the given embodiment with the recess 16 on either side of the lip 7 and the corresponding edge 17 on either side of the opening 9 consist in that the connecting position of the edges 17 to the central lip 7, at least when the bird ring 1 is closed, partly constitute the locking agents 13 which prevent any mutual shifting of the far ends 8 and 10 of the element 2 in the longitudinal direction of the bird ring 1.

The use of an improved bird ring 1 according to the invention is very simple and as follows.

The bird ring 1 is preferably made by means of injection moulding or the like.

During or after the production of the bird ring 1, identification data can be provided on the element 2 by means of printing or the like.

Before the improved bird ring 1 is applied round the bird's leg, the free ends 8 and 10 of the bird ring 1 are applied round the bird's leg and are connected to one another by means of the above-mentioned lock 6.

During the closing action, the lip 7 will shift in the opening 9 until the hook-shaped part 11 catches behind the edge 12 and the pointed edge 17 slides in the V-shaped recess 16.

Since the enclosed angle between the hook-shaped part 11 and the lip 7 is preferably smaller than 90°, this hook-shaped part 11 so to say forms a barb catching behind the edge 12 and which makes it practically impossible for a bird to open the lock 6.

The predominantly connecting position of the lip 7 to the side walls 14 of the opening 9, and also the connecting position of the edges 17 to the central lip 17, constitute the locking agents 13 of the bird ring 1 which prevent any mutual shifting of the far ends 8 and 10 in the longitudinal direction of the formed ring.

Thus is avoided that birds having a large bite force, such as pheasants, parakeets, parrots or the like, might open the lock 6 as they cannot laterally push the lip 7 out of the opening 9.

Also the radial fixing means 15 form an additional security against any mutual shifting of the far ends 8 and 10 in relation to one another, but in a radial direction of the ring then, as the pointed edge 17 meshes in the V-shaped recess 16.

In the given example, the parts 3 and 4 as well as the hinge 5 are made in one piece, but it is not excluded according to the invention for the parts 3 and 4 to be made as two loose parts which are hinge-mounted in relation to one another.

The bird ring 1 according to the invention must not necessarily be provided with two parts 3 and 4, but it may also be formed of a single flexible element 2 or it may be formed of two parts moving in relation to one another.
Naturally, the above-mentioned hinge 5 can be realised in many ways and it is not restricted to a film hinge design.

It is also clear that the opening 9 may be a deepening in the material and must not necessarily be a through opening.

In the embodiment of an improved bird ring 1 according to the invention described by way of example, no use is made of form tension to close the bird ring 1, but, according to a variant of an improved bird ring 1 according to the invention which is not represented in the drawings, the element 2 may consist of a one-piece open ring or of several ring parts which assume the shape of a ring thanks to their form tension, either without any force having to be applied to this end by the user, or as these parts are moved over a 'dead point' by the user during the closing action.

An improved bird ring according to the invention can be made in all sorts of dimensions and has for example a diameter within a range of 12 to 18 millimetres, depending on the type of bird for which this bird ring will be used.

The present invention is by no means restricted to the embodiments described by way of example and represented in the accompanying drawings; on the contrary, an improved bird ring according to the invention can be made in all sorts of shapes and dimensions while still remaining within the scope of the invention.

## Claims

1. Improved bird ring which consists of an element (2) which comprises two practically bracket-shaped parts (3,4) which are hinge-mounted in relation to one another, which element (2) can be provided with two free ends (8,10) round the bird's leg and which is provided with a lock (6) on the above-mentioned far ends (8,10) which lock (6) is provided with locking agents (13) which, when the bird ring (1) is closed, prevent the far ends (8,10) of the element (2) from mutually shifting in the longitudinal direction of the bird ring (1) and which lock (6) more in particular comprises a lip (7) on one far end (8) of the element (2) and an opening (9) in the other far end (10) of the element (2), the above-mentioned lip (7) being provided mainly in line with the bracket-shaped part (3) whereon it is provided, **characterised in that** the lip (7) is provided with a hook-shaped part (11) which is placed at an angle in relation to the lip (7), which angle is situated within a range of 30° to 95°, and whereby the opening (9) is shaped such that the access to the opening (9), considered while the bird ring (1) is closed, is mainly radial.

2. Improved bird ring according to claim 1, **characterised in that** the above-mentioned locking agents (13) are at least formed of a predominantly connecting position of the lip (7) to the side walls (14) of the opening (9).

3. Improved bird ring according to claim 1 or 2, **characterised in that** the above-mentioned lock (6) is provided with a lip (7) on one far end (8) of the element (2), and with one or several edges (17) on the other far end (10) of the element (2), whereby the above-mentioned locking agents (13) are formed among others of a predominantly connecting position of the lip (7) to the edges (17).

4. Improved bird ring according to claim 2 or 3, **characterised in that** the hook-shaped part (11), while the bird ring (1) is being closed, catches behind an edge (12).

5. Improved bird ring according to one or more of the preceding claims, **characterised in that** the above-mentioned hook-shaped part (11) is mainly directed away from the centre line of the bird ring.

6. Improved bird ring according to one or more of the claims 1 to 5, **characterised in that** the above-mentioned angle amounts to less than 90°, and in particular amounts to 80°.

7. Improved bird ring according to any one of the preceding claims, **characterised in that** the above-mentioned lock (6) is provided with radial fixing means (15) which, when the bird ring (1) is closed, prevent the far ends (8,10) of the element (2) from radially shifting in relation to one another.

8. Improved bird ring according to claim 7, **characterised in that** the above-mentioned radial fixing means (15) comprise a V-shaped recess (16) on one far end (8) of the element (2) and a pointed edge (17) on the other far end (10) of the element (2), whereby the above-mentioned pointed edge (17) fits at least partly in the V-shaped recess (16).

9. Improved bird ring according to claim 8, **characterised in that** the above-mentioned V-shaped recess (16) is provided next to the above-mentioned lip (7) and **in that** the above-mentioned pointed edge (17) is provided next to the above-mentioned opening (9).

## Patentansprüche

1. Verbesserter Vogelring, der aus einem Element (2) besteht, das zwei praktisch klammerförmige Teile (3, 4) umfasst, die bezüglich einander mit Scharnier montiert sind, wobei das Element (2) mit zwei freien Enden (8, 10) um das Vogelbein herum versehen sein kann und mit einem Schloss (6) an den obengenannten abgelegenen Enden (8, 10) versehen ist, das mit Verriegelungsmitteln (13) versehen ist, die bei geschlossenem Vogelring (1) verhindern, dass sich die abgelegenen Enden (8, 10) des Elements (2) gegenseitig in der Längsrichtung des Vogelrings (1) verschieben, wobei das Schloss (6) inbesondere eine Lippe (7) an einem abgelegenen Ende (8) des Elements (2) und eine Öffnung (9) im anderen abgelegenen Ende (10) des Elements (2) umfasst, wobei die obengenannte Lippe (7) im Wesentlichen auf der gleichen Linie mit dem klammerförmigen Teil (3) vorgesehen ist, auf dem sie vorgesehen ist, **dadurch gekennzeichnet, dass** die Lippe (7) mit einem hakenförmigen Teil (11) versehen ist, der bezüglich der Lippe (7) in einem Winkel platziert ist, der im Bereich von 30° bis 95° liegt, und wobei die Öffnung (9) so geformt ist, dass der Zugang zu der Öffnung (9), im geschlossenen Zustand des Vogelrings (1) gesehen, im Wesentlichen radial ist.

2. Verbesserter Vogelring nach Anspruch 1, **dadurch gekennzeichnet, dass** die obengenannten Verriegelungsmittel (13) mindestens aus einer hauptsächlichen Verbindungsposition der Lippe (7) mit den Seitenwänden (14) der Öffnung (9) gebildet sind.

3. Verbesserter Vogelring nach Anspruch 1 oder 2, **dadurch gekennzeichnet, dass** das obengenannte Schloss (6) an einem abgelegenen Ende (8) des Elements (2) mit einer Lippe (7) und am anderen abgelegenen Ende (10) des Elements (2) mit einem oder mehreren Rändern (17) versehen ist, wodurch die obengenannten Verriegelungsmittel (13) unter anderem aus einer hauptsächlichen Verbindungsposition der Lippe (7) mit den Rändern (17) gebildet sind.

4. Verbesserter Vogelring nach Anspruch 2 oder 3, **dadurch gekennzeichnet, dass** der hakenförmige Teil (11) im geschlossenen Zustand des Vogelrings (1) einen Rand (12) hintergreift.

5. Verbesserter Vogelring nach einem oder mehreren der vorhergehenden Ansprüche, **dadurch gekennzeichnet, dass** der obengenannte hakenförmige Teil (11) im Wesentlichen von der Mittellinie des Vogelrings weg gerichtet ist.

6. Verbesserter Vogelring nach einem oder mehreren der Ansprüche 1 bis 5, **dadurch gekennzeichnet, dass** der obengenannte Winkel weniger als 90° und insbesondere 80° beträgt.

7. Verbesserter Vogelring nach einem der vorhergehenden Ansprüche, **dadurch gekennzeichnet, dass** das obengenannte Schloss (6) mit radialen Befestigungsmitteln (15) versehen ist, die bei geschlossenem Vogelring (1) verhindern, dass sich die abgelegenen Enden (8, 10) des Elements (2) gegenseitig radial verschieben.

8. Verbesserter Vogelring nach Anspruch 7, **dadurch gekennzeichnet, dass** die obengenannten radialen Befestigungsmittel (15) an einem abgelegenen Ende (8) des Elements (2) eine V-förmige Aussparung (16) und am anderen abgelegenen Ende (10) des Elements (2) einen spitzen Rand (17) umfassen, wodurch der obengenannte spitze Rand (17) mindestens teilweise in die V-förmige Aussparung (16) passt.

9. Verbesserter Vogelring nach Anspruch 8, **dadurch gekennzeichnet, dass** die obengenannte V-förmige Aussparung (16) neben der obengenannten Lippe (7) vorgesehen ist und dass der obengenannte spitze Rand (17) neben der obengenannten Öffnung (9) vorgesehen ist.

## Revendications

1. Bague d'oiseau améliorée consistant en un élément (2) comprenant deux parties (3, 4) prenant en pratique une forme de ferrure fixées par charnière l'une à l'autre, ledit élément (2) pouvant être pourvu de deux extrémités libres (8, 10) entourant la patte de l'oiseau et étant pourvu d'un élément de verrouillage (6) placé sur les extrémités distales (8, 10) susmentionnées, ledit élément de verrouillage (6) étant pourvu d'agents de verrouillage (13) qui, lorsque la bague d'oiseau (1) est fermée, empêchent les extrémités distales (8, 10) de l'élément (2) de se déplacer l'une par rapport à l'autre dans la direction longitudinale de la bague d'oiseau (1) et ledit élément de verrouillage (6) comprenant plus particulièrement une lèvre (7) placée sur une extrémité distale (8) de l'élément (2) et une ouverture (9) placée sur l'autre extrémité distale (10) de l'élément (2), la lèvre (7) susmentionnée étant pour l'essentiel alignée avec la partie (3) en forme de ferrure sur laquelle elle est positionnée, **caractérisée en ce que** la lèvre (7) est pourvue d'une partie (11) en forme de crochet placée selon un certain angle par rapport à la lèvre (7), ledit angle étant compris dans une plage allant de 30° à 95° et l'ouverture (9) présentant une forme telle que l'accès à l'ouverture (9) occupe principalement le plan radial lorsque la bague d'oiseau (1) est fermée.

2. Bague d'oiseau améliorée selon la revendication 1, **caractérisée en ce que** les agents de verrouillage (13) susmentionnés sont constitués au moins d'une position servant principalement de liaison entre la lèvre (7) et les parois latérales (14) de l'ouverture (9).

3. Bague d'oiseau améliorée selon la revendication 1 ou 2, **caractérisée en ce que** l'élément de verrouillage (6) susmentionné est pourvu d'une lèvre (7) placée sur une extrémité distale (8) de l'élément (2) et d'une ou plusieurs arêtes (17) placées sur l'autre extrémité distale (10) de l'élément (2), les agents de verrouillage (13) susmentionnés étant constitués entre autres d'une position servant principalement de liaison entre la lèvre (7) et les arêtes (17).

4. Bague d'oiseau améliorée selon la revendication 2 ou 3, **caractérisée en ce que** la partie (11) en forme de crochet agrippe l'arrière d'une arête (12) lorsque la bague d'oiseau (1) est fermée.

5. Bague d'oiseau améliorée selon l'une quelconque des revendications précédentes ou plusieurs d'entre elles, **caractérisée en ce que** la partie (11) en forme de crochet susmentionnée est principalement dirigée de façon à s'écarter de la ligne centrale de la bague d'oiseau.

6. Bague d'oiseau améliorée selon l'une quelconque des revendications 1 à 5 ou plusieurs d'entre elles, **caractérisée en ce que** l'angle susmentionné est inférieur à 90° et notamment inférieur à 80°.

7. Bague d'oiseau améliorée selon l'une quelconque des revendications précédentes, **caractérisée en ce que** l'élément de verrouillage (6) susmentionné est pourvu de moyens de fixation (15) radiaux qui empêchent les extrémités distales (8, 10) de l'élément (2) de se déplacer l'une par rapport à un autre dans le plan radial lorsque la bague d'oiseau (1) est fermée.

8. Bague d'oiseau améliorée selon la revendication 7, **caractérisée en ce que** les moyens de fixation (15) radiaux susmentionnés comprennent un renfoncement (16) en forme de V placé sur un extrémité distale (8) de l'élément (2) et une arête pointue (17) placée sur l'autre extrémité distale (10) de l'élément (2), l'arête pointue (17) susmentionnée se logeant au moins en partie dans le renfoncement (16) en forme de V.

9. Bague d'oiseau améliorée selon la revendication 8, **caractérisée en ce que** le renfoncement (16) en forme de V susmentionné est positionné à côté de la lèvre (7) susmentionnée et que l'arête pointue (17) susmentionnée est positionnée à côté de l'ouverture (9) susmentionnée.
